# EUROPEAN PATENT APPLICATION

(11) **EP 2 887 432 A1**
(43) Date of publication of application: **24.06.2015**
(21) Application number: 12888292.5
(22) Date of filing: 28.11.2012
(51) Int. Cl.: H01M 4/505, H01M 4/139, C01G 45/02, H01M 10/052

(54) **LITHIUM-MANGANESE COMPOSITE OXIDE IN WHICH SIZE OF VERTICAL ANGLE OF PRIMARY PARTICLE IS ADJUSTED, AND METHOD FOR PREPARING SAME**

(30) Priority: 15.11.2012 KR 20120129730
(71) Applicant: Posco ES Materials Co. Ltd., Gumi-si, Gyeongsangbuk-do 730-853 (KR)
(72) Inventor: MIN, Sung-Hwan, Seoul 136-120 (KR); LEE, Min-Young, Jinju-si Gyeongsangnam-do 660-080 (KR); KO, Hyoung-Shin, Gumi-si Gyeongsangbuk-do 730-764 (KR); LEE, Jae-An, Gumi-si Gyeongsangbuk-do 730-764 (KR)
(74) Representative: Simons, Amanda Louise
(86) International application number: PCT/KR2012/010165
(87) International publication number: WO 2014/077445

(57) **Abstract**

The present invention relates to a lithium-manganese composite oxide in which the size of the face angle (vertical angle) of a primary particle is adjusted, and a method for preparing the same. The lithium-manganese composite oxide in which the size of the vertical angle of the primary particle is adjusted, and the method for preparing the same according to the present invention may gently adjust the size of the vertical angle of the polygon that constitutes a primary particle having a shape of a convex polyhedron in the lithium-manganese composite oxide, thus preventing the formation of convex-concave portions at the surface of an electrode plate in the process of forming the electrode plate by means of rolling during the manufacturing of a battery, thereby having an effect of improving characteristics of the battery.

## Description

### Field of the Invention

The present invention relates to a lithium-manganese composite oxide in which the size of the vertical angle of a primary particle is adjusted, and a method for preparing the same. More particularly, it relates to a lithium-manganese composite oxide in which the size of the vertical angle of the polygon that constitutes a primary particle having a shape of a convex polyhedron is adjusted, and a method for preparing the same.

### Background of the Invention

In recent, as electrical, electronic, communication and computer industries advance rapidly, the demands for high safety lithium secondary batteries are gradually increasing. In particular, miniaturizing, slimming and lightweighting electronic devices are spreading rapidly, thereby the demands for miniaturizing and slimming of the batteries are gradually increasing.

Further, a lithium manganese composite oxide having spinel structure has advantages in safety and cost, compared to other cathode active material for a lithium or lithium secondary battery of 4 volt potential, thereby being studied a lot. In particular, it is an actively studied material in the field of a secondary battery having large capacity for a vehicle whose most important characteristic is safety.

The lithium secondary battery mainly uses lithium-based oxide as a cathode active material and carbon material as an anode active material. Generally, the lithium secondary battery comprises: a cathode electrode plate coated with a cathode active material; an anode electrode plate coated with an anode active material; an electrode assembly wound with a separator, which is located between the cathode electrode plate and the anode electrode plate, and prevents short and makes possible to transfer only Li-ion; a lithium battery case encasing the electrode assembly; an electrolyte, which is inserted inside of the case for a Li-ion secondary battery and makes possible to transfer Li-ion; and the like.

The cathode and anode electrode plates of a Li-ion secondary battery as described above are formed through the following process: an active material, a conducting material and a binder are mixed with an organic solvent to prepare slurry, the slurry is coated on the electrode assembly and rolled to form an active material layer.

However, in the process of forming the electrode plates described above by rolling, edges of a primary particle constituting the active material becomes sharp, thereby convex-concave is formed on the electrode plate surface, and it causes non-smooth electrode plate surface. Accordingly, resistance on the surface becomes vary depending on location, and current crowding problem is occurred at the location having lower resistance.

Thus, there are problems that lithium metal is extracted by the current crowding thereby forming dendrite, or it causes rapid temperature increase. Further, if the surface is not even, the initial surface film is also unevenly formed on the electrode active material, thereby there is difference on ion conductivity. After all, there are problems that battery resistance increases, ion conductivity decreases, and life time of the last stage becomes shorter when charging/discharging continues.

### Summary of the Invention

The present invention has been made in an effort to solve the above-described problems associated with prior art.

The present invention is objected to provide a polyhedral lithium-manganese composite oxide in which the size of vertical angle is adjusted, which constitutes a convex polyhedron-shaped primary particle.

Further, the present invention is objected to provide a method for manufacturing the lithium-manganese composite oxide in which the size of vertical angle of a primary particle is adjusted.

In order to accomplish one object of the present invention, provided is a lithium-manganese composite oxide in which the size of vertical angle of a primary particle is adjusted, which is a secondary particle formed by agglomeration of a plurality of primary particles, wherein the primary particle has a shape of convex polyhedron, and the size of vertical angle of the polygon constituting the convex polyhedron is 90° to 120°.

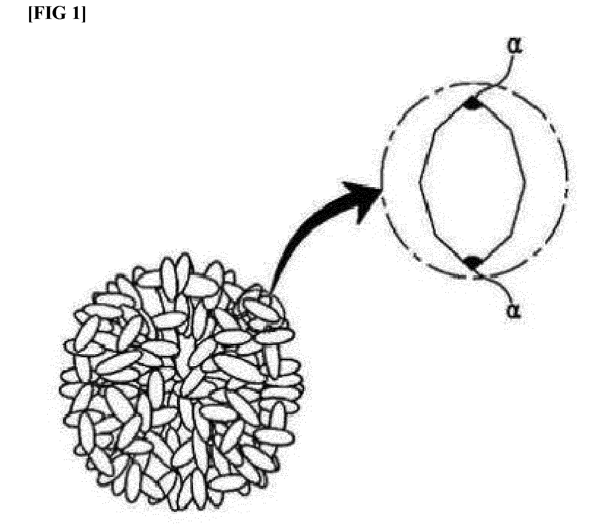

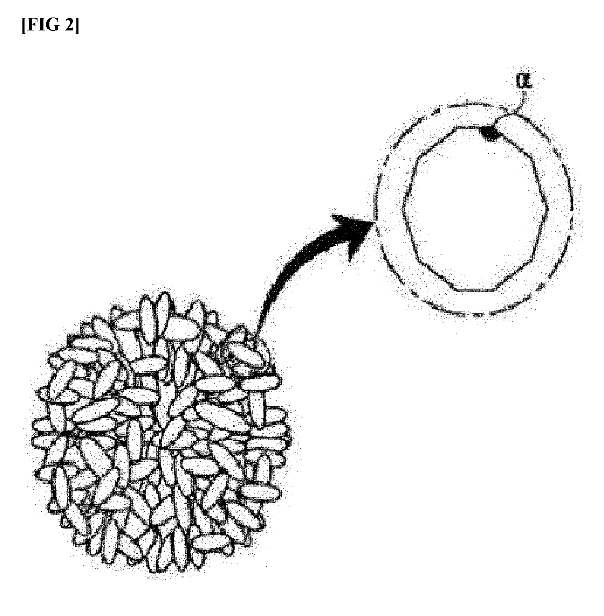

FIG. 1 mimetically illustrates a shape of a primary particle of the conventional general lithium-manganese composite oxide, FIG. 2 mimetically illustrates a shape of a primary particle of the lithium-manganese composite oxide according to the present invention.

As shown in FIG. 1, in the primary particle of the conventional general lithium-manganese composite oxide, the polygon constituting the primary particle is mainly triangle or lozenge, and the vertical angle of the triangle or lozenge is 90° or less, thereby the polyhedron of the primary particle contains sharp edges. In the process of forming an electrode plate by rolling the lithium-manganese composite oxide as a secondary particle, which is formed by agglomerating plurality of the said primary particles, convex-concave is formed on the electrode plate surface by the sharp edges of the primary particles, thereby there was a problem that the electrode plate surface is not smooth.

By comparison, as shown in FIG. 2, in the primary particle of the lithium-manganese composite oxide according to the present invention, the vertical angle α of the polygon constituting the convex polyhedron is 90° to 120°, thereby the polyhedron of the primary particle made up of these polygons have gentle edges. Accordingly, the secondary particle of the present invention, which is formed by agglomerating a plurality of the primary particles, does not form convex-concave on the surface of the electrode plate even if it is rolled to enhance electrode density.

In the present invention, it is preferred that all vertical angle size of the polygon constituting the convex polyhedron of the primary particle is 90° to 120°.

The primary particle of the lithium-manganese composite oxide according to the present invention is not limited, and it may be rectangular parallelepiped, needle-shaped, plate-shaped, angular-shaped or column-shaped.

The secondary particle of the lithium-manganese composite oxide according to the present invention may be expressed by LiₐMn_{2-b}M_{b}O_{4-d}X_{d} (1≤a≤1.2, 0≤b≤0.2, 0≤d≤0.65, M is any one selected from the group consisting of B, Al, Co, Ni, Cr, Mg and a combination thereof, and X is any one selected from the group consisting of F, Cl, Br, I, S and a combination thereof).

The secondary particle of the lithium-manganese composite oxide according to the present invention may have D₅₀ of 20 to 30 µm.

Further, the present invention provides a method for preparing the lithium-manganese composite oxide in which the size of vertical angle of a primary particle is adjusted, which comprises:
adding lithium compound, manganese compound, M-containing compound and X-containing compound in a solvent and mixing thereof;
stirring and crushing the mixture until it has particle diameter of 0.5 µm or less and viscosity of 500 cp or less;
spray-drying the crushed mixture to form spherical secondary particle; and
heating the particle.

In the method for preparing the lithium-manganese composite oxide according to the present invention in which the size of vertical angle of a primary particle is adjusted, the lithium compound and the manganese compound are not particularly limited if they can be industrially available, and for example, they may be oxide, hydroxide, carbonate, nitrate and organic acid salt of each metal.

Specifically, the manganese compound may be electrolytic manganese dioxide and chemically synthesized manganese dioxide, preferably, because it is easy to be available and cheap. Further, the lithium compound may be lithium carbonate, preferably, because it is easy to be available and cheap. Manufacturing process of these materials is not limited, but in order to manufacture high purity lithium-manganese composite oxide, it is preferred to contain impurity as small as possible. The manganese compound and the lithium compound may be used in a combination of at least one kinds of each compound.

In the method for preparing the lithium-manganese composite oxide of the present invention, the M may be any one selected from the group consisting of B, Al, Co, Ni, Cr, Mg and a combination thereof, and it may be Al, preferably, and the aluminum compound may be aluminum hydroxide, preferably, because it is easy to be industrially available and cheap.

In the method for preparing the lithium-manganese composite oxide of the present invention, the X may be F, and the X-containing compound may be LiF.

The method of the lithium-manganese composite oxide according to the present invention in which the size of vertical angle of a primary particle is adjusted is technically characterized in that it is conducted by: mixing the lithium compound, the manganese compound, the M-containing compound and the X-containing compound in a solid state; wet-crushing thereof until it has particle diameter of 0.5 µm or less and viscosity of 500 cp or less; and manufacturing the spherical secondary particle by spray-dyring thereof, thereby manufacturing the primary particles in which the size of vertical angle is adjusted, and the secondary particle, which is formed by agglomerating a plurality of the primary particles.

In the method for preparing the lithium-manganese composite oxide of the present invention, the heating may be conducted at a temperature of 840 to 890°C.

Calcination of the mixture may be conducted at a temperature, which can manufacture the lithium-manganese composite oxide, and the temperature may be 500 to 1100°C, preferably 600 to 1000°C, more preferably 700 to 900°C. Further, the calcination may be conducted for 1 to 24 hours, preferably 10 to 20 hours. The calcination may conducted in atmospheric or oxygen condition, but not limited thereto.

### Advantageous Effects of the Invention

The lithium-manganese composite oxide in which the size of the vertical angle of the primary particle is adjusted, and the method for preparing the same according to the present invention may gently adjust the size of the vertical angle of the polygon that constitutes a primary particle having a shape of a convex polyhedron in the lithium-manganese composite oxide, thus preventing the formation of convex-concave portions at the surface of an electrode plate in the process of forming the electrode plate by means of rolling during the manufacturing of a battery, thereby having an effect of improving characteristics of the battery.

### Brief Description of Drawings

The above and other objects and features of the present invention will become apparent from the following description of the invention taken in conjunction with the following accompanying drawings, which respectively show:
FIG. 1: a shape of a primary particle of the conventional lithium-manganese composite oxide;
FIG. 2: a shape of a primary particle of the lithium-manganese composite oxide according to the present invention;
FIG. 3: SEM images of lithium-manganese composite oxides manufactured in Example of the present invention and Comparative Example;
FIG. 4: a graph showing the result of measuring initial charge/discharge characteristic of a battery comprising the lithium-manganese composite oxide manufactured in Example of the present invention; and
FIG. 5 and FIG. 6: graphs showing the results of measuring charge/discharge characteristic and life time characteristic of a battery comprising the lithium-manganese composite oxide manufactured in Example of the present invention.

### Detailed Description of the Invention

The following Examples illustrate the invention and are not intended to limit the same.

### Example

Equivalent ratio of Mn₃O₄ as a manganese compound, Li₂CO₃ as a lithium compound, Al(OH)₃ as a M compound and LiF as a X compound were added to distilled water, mixed and stirred in an agitator at 400 rpm for 5 min. Then, the mixture was crushed in a wet-crusher (Brand Name: NANO INTECH) until it has particle diameter (D50) of 0.5 µm or less and viscosity of 500 cp or less.

The completely crushed mixture slurry was put into a spray dryer for Lab (Ein System, Input temp.: 270 to 300°C, Output temp.: 100 to 120°C), and liquid droplets were generated through a pneumatic Atomizer-type sprayer at a pressure of 1.5 bar, thereby generating spherical cathode active material precursor particles.

A certain amount of the prepared spherical precursor was put into a melting pot, heated at a rate of 3°C/min up to a temperature of 880°C, and calcined. The calcined lithium manganese composite oxide was disintegrated and classified using a disk mill and 325 mesh.

### Comparative Example

The procedure of Example 1 was repeated except for not adding LiF as a X compound to manufacture a lithium-manganese composite oxide.

### Test Example 1 : SEM Measurement

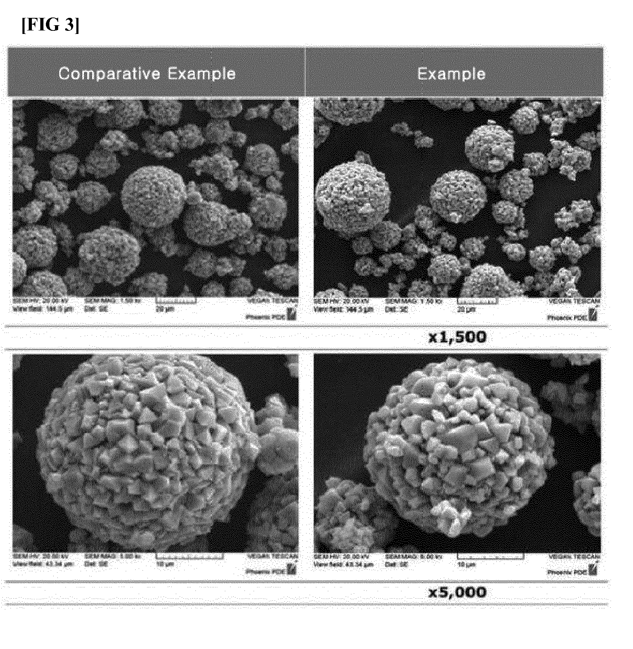

The lithium-manganese composite oxides obtained in Example and Comparative Example were observed by SEM and the resulting images were shown in FIG. 3.

As shown in FIG. 3, it can be found that vertical angle of the lithium manganese composite oxide manufactured in Example of the present invention became gentle.

### Test Example 2: Vertical Angle Measurement

10 primary particles were randomly selected from the lithium-manganese composite oxide secondary particles obtained in Example and Comparative Example, respectively, and vertical angle was measured against polygon constituting each primary particle. The results were shown in the following Table 1.

**Table 1**

| | Example | Comparative Example |
|---|---|---|
| 1 | 101° | 60° |
| 2 | 103° | 72° |
| 3 | 108° | 65° |
| 4 | 98° | 67° |
| 5 | 96° | 59° |
| 6 | 100° | 73° |
| 7 | 102° | 82° |
| 8 | 95° | 69° |
| 9 | 110° | 72° |
| 10 | 112° | 73° |

As shown in Table 1, in the case of the lithium-manganese composite oxide secondary particle manufactured in Example of the present invention, it can be found that the size of the vertical angle of the polyhedron constituting the primary particle is improved, compared to Comparative Example.

### Preparation Example

The lithium-manganese composite oxide sample obtained in Example 1 70 wt%, graphite powder 20 wt% and polyvinylidene fluoride 10 wt% were mixed and used as a cathode mix. The mix was dispersed in N-methyl-2-pyrrolidinone to prepare mixing paste. The mixing paste was coated on an aluminum foil, pressed and stamped out on a disc having diameter of 15 mm to obtain a cathode plate. A lithium secondary battery was manufactured using this cathode plate and members such as a separator, an anode, a current collector, a mounting device, an outer terminal and an electrolyte. Carbon having high crystallinity was used as the anode, and LiPF₆ dissolved in 1 Liter of a 1:1 mixture of ethylmethyl carbonate and ethylene carbonate was used as the electrolyte.

### Test Example 3: Initial Discharge Capacity Measurement

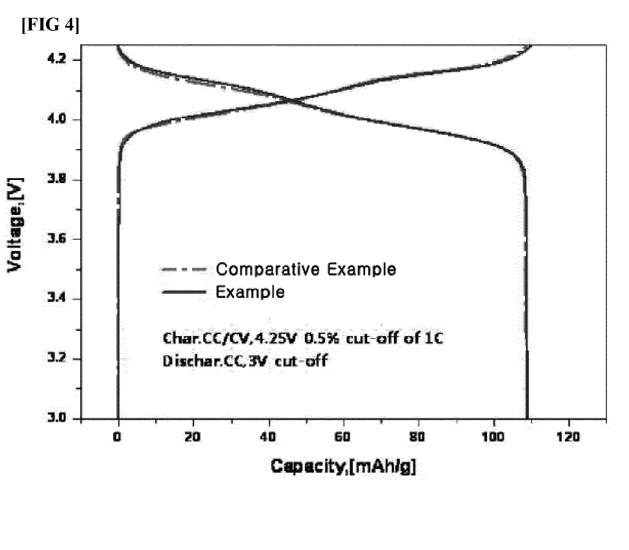

At 50°C, 1 cycle of charge/discharge of the cathode was conducted by charging up to 4.3 V at 0.5 mA/cm² and discharging up to 3.5 V, and discharge capacity was measured. The discharge capacity of the first cycle as the initial discharge capacity was shown in FIG. 4.

### Test Example 4: Life Time Characteristic Measurement

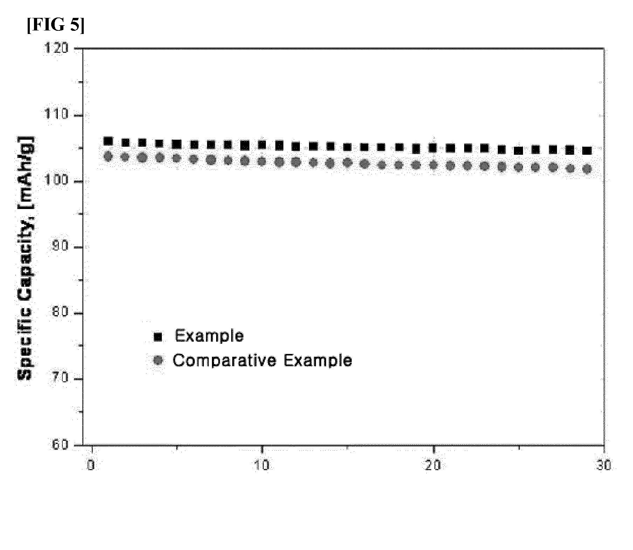

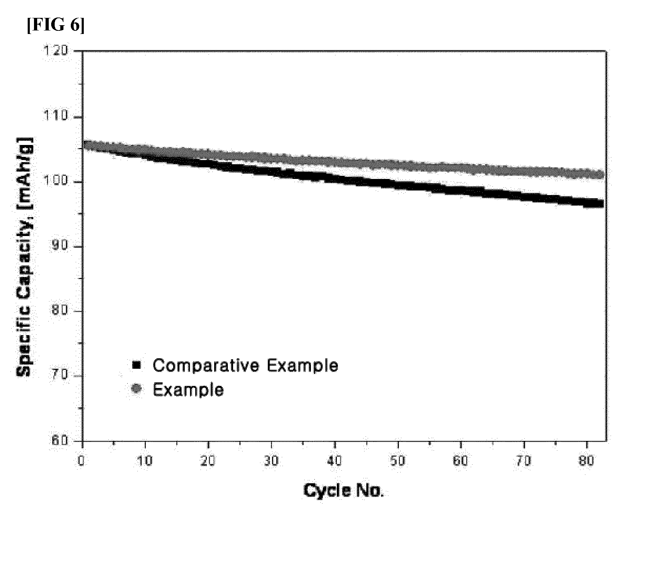

80 cycles of charge/discharge were conducted as described above at a room temperature and a high temperature (45°C), and then discharge capacity and life time characteristic were measured. The results were shown in FIG. 5 and FIG. 6, respectively.

As shown in FIG. 5 and FIG. 6, in the case of the lithium-manganese composite oxide manufactured according to the present invention, it can be found that its capacity was maintained higher and more constant at a room temperature and a high temperature (45°C) than Comparative Example, thereby its life time characteristic was improved.

### Industrial Applicability

The lithium-manganese composite oxide in which the size of the vertical angle of the primary particle is adjusted, and the method for preparing the same according to the present invention may gently adjust the size of the vertical angle of the polygon that constitutes a primary particle having a shape of a convex polyhedron in the lithium-manganese composite oxide, thus preventing the formation of convex-concave portions at the surface of an electrode plate in the process of forming the electrode plate by means of rolling during the manufacturing of a battery, thereby having an effect of improving characteristics of the battery.

While the invention has been described with respect to the above specific embodiments, it should be recognized that various modifications and changes may be made and also fall within the scope of the invention as defined by the claims that follow.

## Claims

1. A lithium-manganese composite oxide in which the size of vertical angle of a primary particle is adjusted, which is a secondary particle formed by agglomeration of a plurality of primary particles, wherein the primary particle has a shape of convex polyhedron, and the size of vertical angle of the polygon constituting the convex polyhedron is 90° to 120°.

2. The lithium-manganese composite oxide in which the size of vertical angle of a primary particle is adjusted according to claim 1, wherein the primary particle is rectangular parallelepiped, needle-shaped, plate-shaped, angular-shaped or column-shaped.

3. The lithium-manganese composite oxide in which the size of vertical angle of a primary particle is adjusted according to claim 1, wherein the size of all vertical angle of the polygon constituting the convex polyhedron of the primary particle is 90° to 120°.

4. The lithium-manganese composite oxide in which the size of vertical angle of a primary particle is adjusted according to claim 1, wherein D₅₀ of the secondary particle is 20 to 30 µm.

5. The lithium-manganese composite oxide in which the size of vertical angle of a primary particle is adjusted according to claim 1, wherein the secondary particle is expressed by LiₐMn_{2-b}M_{b}O_{4-d}X_{d} (1≤a≤1.2, 0≤b≤0.2, 0≤d≤0.65, M is any one selected from the group consisting of B, Al, Co, Ni, Cr, Mg and a combination thereof, and X is any one selected from the group consisting of F, Cl, Br, I, S and a combination thereof).

6. A method for preparing the lithium-manganese composite oxide in which the size of vertical angle of a primary particle is adjusted according to claim 1, which comprises:
adding lithium compound, manganese compound, M-containing compound and X-containing compound in a solvent and mixing thereof;
stirring and crushing the mixture until it has particle diameter of 0.5 µm or less and viscosity of 500 cp or less;
spray-drying the crushed mixture to form spherical secondary particle; and
heating the particle.

7. The method for preparing the lithium-manganese composite oxide in which the size of vertical angle of a primary particle is adjusted according to claim 6, wherein the M is Al and the M-containing compound is Al(OH)₃.

8. The method for preparing the lithium-manganese composite oxide in which the size of vertical angle of a primary particle is adjusted according to claim 6, wherein the X is F and the X-containing compound is LiF.

9. The method for preparing the lithium-manganese composite oxide in which the size of vertical angle of a primary particle is adjusted according to claim 6, wherein the heating is conducted at a temperature of 840 to 890°C.
